# EUROPÄISCHE PATENTSCHRIFT

(11) **EP 0 517 083 B1**
(45) Veröffentlichungstag und Bekanntmachung des Hinweises auf die Patenterteilung: **24.07.1996**
(21) Anmeldenummer: 92108908.2
(22) Anmeldetag: 27.05.1992
(51) Int. Cl.: H02G 11/02, B65H 75/22, B65H 75/40

(54) **Aufwickelvorrichtung für fadenartiges Gut**
Device for winding up thread-like materials
Dispositif d'enroulement de matériaux filiformes

(30) Priorität: 07.06.1991 DE 9107008 U; 09.10.1991 DE 9112546 U
(43) Veröffentlichungstag der Anmeldung: 09.12.1992
(73) Patentinhaber: Hartmann, Horst, D-91355 Hiltpoltstein (DE)
(72) Erfinder: Hartmann, Horst, D-91355 Hiltpoltstein (DE)
(74) Vertreter: Tergau, Enno, Dipl.-Ing.

(56) Entgegenhaltungen:
- FR-A- 2 606 388
- US-A- 3 208 121
- US-A- 4 101 095
- US-A- 4 390 142

## Beschreibung

Die Erfindung betrifft eine Aufwickelvorrichtung für fadenartiges Gut mit den Merkmalen des Oberbegriffs des Anspruches 1. Bei fadenartigem Gut besteht häufig das Problem, daß die erwünschte Sollänge von der tatsächlichen vorhandenen Istlänge des fadenartigen Gutes abweicht. Wenn in diesem Zusammenhang von fadenartigem Gut die Rede ist, so kann es sich um alle denkbaren Ausführungsformen von fadenartigem Gut handeln, insbesondere Fäden, Seile, Leinen, Schnüre, elektrische Leitungskabel, Kabel allgemein und Schläuche etc. aus allen denkbaren Werkstoffen. Insbesondere bei Leitungskabeln ist das Problem des Abweichens der Istlänge von der Sollänge bekannt. Beispielsweise ist die Länge von Verbindungskabeln zwischen Telefonapparaten und den zugehörigen Telefonanschlußdosen genormt. Ebenso ist die Länge von Anschlußkabeln von Peripheriegeräten an Computern oder Stereoanlagen genormt. Wird diese gesamte Normlänge zum Anschluß des Peripheriegeräts nicht benötigt, liegt das Kabel meistens mehr oder weniger ordentlich aufgerollt herum. Vor allem bei zentralen Steuergeräten, wie der Zentraleinheit eines Personal-Computers oder des Tuners einer Stereoanlage, muß oftmals eine Vielzahl unterschiedlicher Kabel angeschlossen werden. Diese sind meistens zu lang und werden einfach hinter das Gerät gestopft. Die Kabel verwickeln sich meistens derart ineinander, daß hinter dem Gerät sogenannter "Kabelsalat" entsteht. Soll hinterher eine Leitung entfernt oder ausgetauscht werden, müssen zuvor sämtliche Kabel erst entwirrt werden und das entsprechende Kabel herausgesucht werden. Dies erfordert einerseits sehr viel Zeit und andererseits oftmals ein hohes Maß an Geduld.

Auch bei nur temporär aufgestellten Geräten weicht oftmals die Istlänge der Versorungs- und Steuerungskabel von der benötigten Sollängeab. Dies kann wiederum zu der beschriebenen Unordnung zwischen den einzelnen Leitungskabeln führen. Zudem besteht die Gefahr, daß unbeteiligte Passanten über zu lange, herumliegende Stabel stolpern und sich ernstlich verletzen. Dieser Fußangeleffekt birgt über den möglichen Schaden an der angeschlossenen technischen Anlage hinaus zum einen das Verletzungsrisiko für den Stolpernden und andererseits ein Haftungsrisiko für den Anlagenbetreiber.

Um das fadenartige Gut von seiner Istlänge auf eine gewünschte Sollänge zu verkürzen ist aus der
**EP 180 883**
eine Aufwickelvorrichtung für fadenartiges Gut bekannt. Bei dieser Aufwickelvorrichtung ist eine drehbare Aufwickelwelle zwischen den Seitenteilen einer Gehäusetrommel drehbar gelagert. Die Aufwickelwelle ist mit einer sie drehantreibenden Rückholfeder versehen, die mit ihrer Federkraft die Aufwickelwelle beaufschlagt. Infolge der auf die Aufwickelwelle wirkenden Federkraft dreht sich die Aufwickelwelle und wickelt das fadenartige Gut um sich auf. Nachteilig an dieser Vorrichtung ist die aufwendige Montage. Das fadenartige Gut muß hierbei zunächst auf die Aufwickelwelle gefädelt werden und in einem weiteren Arbeitsgang muß das Gehäuse auf komplizierte Weise fest verschlossen werden.

Aus der
**US-PS 28 65 071**
ist eine weitere Aufwickelvorrichtung bekannt, bei der die Aufwickelwelle an einem Gehäuseteil angeformt ist. Die Aufwickelwelle besteht aus zwei Federarmen und bildet mit einer weiteren aufsteckbaren Gehäusetrommel einen Schnappverschluß aus. Auch bei dieser Vorrichtung muß das fadenartige Gut zunächst in die Aufwickelwelle eingefädelt werden und der einlaufende bzw. auslaufende Fadenstrang muß in die zugehörigen Öffnungen der Gehäusetrommel eingefädelt werden, bevor die Gehäusetrommel sicher aufgerastet werden kann. Zudem besteht bei dieser Vorrichtung die Gefahr, daß sich der entstehende Fadenwickel nicht gleichmäßig über die gesamte axiale Länge der Aufwickelwelle verteilt, sondern sich an einer Stelle sehr schnell ein Fadenwickel mit großem Durchmesser bildet, so daß die volle Aufnahmekapazität der Vorrichtung nicht nutzbar ist.

Aus der US-A-43 90 142 ist eine Aufwickelvorrichtung für fadenartiges Gut mit einem aus zwei Gehäusehalbschalen zusammensetzbaren Gehäuse bekannt. Im Gehäuse ist eine aus zwei Halbwellen bestehende Aufwickelwelle drehbar gelagert. Bei dieser Vorrichtung müssen jeweils eine Halbschale und die ihr zugeordnete Halbwelle zunächst mit einer Aufnahmescheibe in Eingriff gebracht werden, um schließlich durch Einbringung eines Befestigungszylinders miteinander verklemmt zu werden.

Aus der US-A-32 08 121 ist schließlich eine Aufwickelvorrichtung mit zwei Gehäusehalbschalen bekannt. In Lageraugen der Gehäusehalbschalen ist eine einstückige Aufwickelwelle drehbar gelagert. Zur Endmontage müssen zunächst die beiden Gehäusehalbschalen mit der Aufwickelwelle in Eingriff gebracht werden, um das Gehäuse zum Schluß von beiden Seiten her mit Verriegelungselementen verriegeln zu können.

Die Montage dieser vorbekannten Aufwickelvorrichtungen ist wegen der Vielzahl der verwendeten Teile umständlich.

Ausgehend von diesen Nachteilen liegt der Erfindung die Aufgabe zugrunde, eine leicht montierbare Aufwickelvorrichtung mit verbessertem Aufwickelverhalten zu schaffen. Diese Aufgabe ist durch die Merkmalskombination des Anspruchs 1 gelöst.

Die erfindungsmäßige Aufwickelvorrichtung besteht hierfür aus einem Gehäuse und einer im Gehäuse drehbar gelagerten Aufwickelwelle. Die Aufwickelwelle besteht ihrerseits aus zwei Halbwellen, die formschlüssig miteinander verrastbar sind. Das Gehäuse besteht aus zwei Gehäusehalbschalen, die ohne vorheriges Einlegen der Aufwickelwelle zusammensetzbar sind. In das fertig zusammengesetzte Gehäuse sind die beiden Halbwellen von außen einschiebbar. Die im Montageendzustand miteinander formschlüssig verrasteten Halbwellen bewirken auch den dauerhaften Zusammenhalt des Gehäuses insgesamt. Die Vorrichtung benötigt folglich keine Befestigungselemente für die beiden Gehäusehalbschalen. Das Gehäuse ist auf diese Weise denkbar einfach zusammensetzbar. Zur Montage wird zunächst der Fadenstrang durch das Zusammensetzen der beiden Gehäusehalbschalen in das Gehäuse verbracht. Der bereits im fertig montierten Gehäuse einliegende Fadenstrang montiert sich beim Einstecken der Halbwellen gewissermaßen selbstätig. Vorteilhaft ist insbesondere, daß die schon fertig montierten Komponenten der Vorrichtung mit einer Hand gehalten werden können, während die noch fehlenden Komponenten mit der anderen, freien Hand in die Vorrichtung eingebracht werden können.

Die Ansprüche 2 bis 6 betreffen vorteilhafte Weiterbildungen des Gehäuses. Die Verwendung von zwei baugleichen, spiegelverkehrt montierbaren Gehäusehalbschalen nach Anspruch 1 ist fertigungstechnisch vorteilhaft, weil nur ein Gehäuseschalentyp gefertigt werden muß. Zudem muß auch nur dieser eine Gehäuseschalentyp bevorratet werden, was die Lagerkosten und den Distributionsaufwand senkt. Aufgrund der Schüsselform nach Anspruch 2 entsteht eine der Gestalt des auf der Aufwickelwelle entstehenden Fadenwickels angepaßte geräumige Aufwickelkammer.

Die planen Gehäuseseitenwände erlauben eine besonders solide Lagerung der Aufwickelwelle und begünstigen die Nachbearbeitung der Lageraugen für die Aufwickelwelle. Zusammen mit den 12 Planflächen nach Anspruch 4 begünstigen die planen Schüsselböden nach Anspruch 3 sowie die sich auswölbende Schüsselwand nach Anspruch 2 die besonders einfache Herstellbarkeit der Gehäusehalbschalen als Kunststoffspritzteile. Die so gestalteten Spritzteile sind leicht aus den Nestern einer Kunststoffspritzmaschine entformbar. Außerdem bewirken die Planflächen, daß die Vorrichtung nicht zum Wegrollen neigt sondern auf ihrem vorgesehenen Platz stabil liegen bleibt.

Die in Anspruch 5 vorgeschlagenen Zentrierelemente erleichtern das Zusammensetzen des Gehäuses und das nachfolgende Einführen der Halbwellen. Die beiden Gehäusehalbschalen sind hier bereits so gut aufeinander zentriert, daß das Gehäuse als Ganzes hin- und herbewegbar ist, ohne daß ein sofortiges Auseinanderfallen des Gehäuses zu befürchten ist.

Die an gegenüberliegenden Bereichen der Ränder der Gehäusehalbschalen im Bereich der entstehenden Teilfüge vorgesehenen beiden Öffnungen mit verschieden großen Öffnungsquerschnitten bewirken ein bezogen auf die Teilfuge zwischen den Gehäusehalbschalen schräges Einlaufen des fadenartigen Gutes in die Aufwickelkammer. Aufgrund dieser schrägen Einlaufrichtung in die Aufwickelkammer wird das fadenartige Gut auch dazu neigen, sich schräg um die Aufwickelwelle zu wickeln, wodurch eine gleichmäßige Verteilung des entstehenden Fadenwickels über die gesamte axiale Länge der Aufwickelwelle erreicht wird.

Die Ansprüche 7 bis 9 betreffen das Zusammen wirken der Halbwellen einerseits und der Lageraugen in de Gehäuseseitenwänden andererseits. Die beiden Halbwellen bestehen aus Wellenelementen, welche die eigentliche Aufwickelwelle bilden und tragen an jeweils einem Wellenende nach Art eines Flansches Scheiben. Diese Scheiben haben einen geringfügig größeren Durchmesser als die Lageraugen. Der die Lageraugen überstehende Scheibenrand stützt die Scheiben in Axialrichtung gegen die Lageraugen ab und verhindert so ein Durchrutschen der Aufwickelwelle durch eines der Lageraugen. Die Scheiben sind auf diese Weise als Axiallager der Aufwickelwelle im Gehäuse wirksam. Aufgrund der durch die Kröpfung im Randbereich entstehenden offenen Bahnführung für die Scheiben in den Lageraugen fluchten die Scheiben besonders gut am Gehäuse und sind leicht und präzise drehbar. In Verbindung mit den Federarmen und den Bremsbacken nach Anspruch 9 wird die Drehbarkeit der Aufwickelwelle derart erschwert, daß die Aufwickelwelle stabil in einer jeweiligen Sollposition gehalten werden kann.

Die Ansprüche 10 bis 17 betreffen Merkmale an beiden Halbwellen, die das Zusammenwirken beider Halbwellen verbessern. Zur Verriegelung beider Halbwellen miteinander ist die eine Halbwelle als Schlüsselhalbwelle und die andere Halbwelle als Schloßhalbwelle ausgeführt. Die Schlüsselhalbwelle weist Rastelemente auf und die Schloßhalbwelle weist Aufnahmeelemente auf, so daß die Rastelemente nach Art des "Schloß-Schlüssel-Prinzips" mit den Aufnahmeelementen zusammenwirken. Zur Verriegelung beider Halbwellen bedient sich die Erfindung vorteilhaft eines Bajonettverschlusses, mit dessen Hilfe die Aufwickelwelle auch mehrere Male leicht montiert und demontiert werden kann.

Inhalt der Ansprüche 11,12 und 13 ist die konkrete Gestaltung der Rastelemente und der Aufnahmeelemente. Die Rastnasen an der Schlüsselhalbwelle und die Verriegelungshaken an der Schloßhalbwelle erfüllen die eigentliche Funktion des Bajonettverschlusses. Die Schienen an der Schlüsselhalbwelle und die Bahnführungen an der Schloßhalbwelle dienen einerseits als Befestigungseinrichtungen für die Rastnasen und die Verriegelungshaken und bilden andererseits eine Gleitführung miteinander aus, wodurch die Einschiebbarkeit der Schlüsselhalbwelle in die Schloßhalbwelle und damit die Montierbarkeit der Aufwickelwelle zusätzlich erleichtert wird. Die L-förmige Gestaltung der Schienen nach Anspruch 12 erlaubt es, jedem der L-Schenkel eine eigene Funktion zuzuweisen. Dereine L-Schenkel ist hierbei als Tragschenkel für eine Rastnase ausgebildet, während der andere L-Schenkel ein Führungsschenkel mit einer an den Hohlquerschnitt der zugehörigen Bahnführung angepaßten Form ist. Die Stützrippe nach Anspruch 13 bewirkt einerseits eine solide Abstützung der zugehörigen Rastnase und gewährleistet andererseits eine definierte Lage der Schlüsselhalbwelle beim Einschieben in die Schloßhalbwelle. Die an der Schloßhalbwelle ausgebildete Führungsnut nach Anspruch 13 bewirkt mit der schwertförmigen Leiste an der Schlüsselhalbwelle nach Anspruch 14, daß die Schlüsselhalbwelle nur in einer definierten Drehstellung in die Schloßhalbwelle einführbar ist. Die relative Einführposition beider Halbwellen zueinander beim Ineinanderschieben ist hierdurch stets gewährleistet. Die Ansprüche 14 bis 16 beinhalten insbesondere Maßnahmen zur Schaffung eines Hohlkanals innerhalb der fertig montierten Aufwickelwelle. Durch diesen Hohlkanal wird ein Teil des Fadenstrangs zur Fixierung an der Aufwickelwelle geführt. Diese Führung durch den Hohlkanal verstärkt den Effekt des schrägen Verlaufs des Fadenstrangs in der Aufwickelkammer. Der Verlauf des Fadenstrangs wird durch die Führung durch den Hohlkanal zusätzlich geschrägt, wodurch die gleichmäßige Wicklung des Fadenstrangs über die axiale Länge der Aufwickelwelle zusätzlich begünstigt wird.

Anspruch 17 betrifft das erfindungsmäßige Zusammenwirken sämtlicher Merkmale der vorangehenden Ansprüche 1 bis 16.

Anspruch 18 beinhaltet Maßnahmen zur Anbringung eines Griffbügels am Gehäuse und schlägt die Anbringung von farbigen Markierungen sowohl auf den Außenseiten beider Gehäusehalbschalen als auch auf beiden die Aufwickelwelle randseitig begrenzenden Scheiben vor zur Erleichterung der Montage der Aufwickelvorrichtung.

Anspruch 19 schlägt weiterhin Drehknäufe auf den Außenseiten der Scheiben als Bedienungselemente für die Aufwickelwelle vor sowie die Anbringung von Schlitzen, in die Münzen oder ähnliche Montagehilfen einbringbar sind, zum Verdrehen der Halbwellen gegeneinander beim Öffnen oder Schließen des Bajonettverschlusses.

Anhand des folgenden, in den Zeichnungen dargestellten Ausführungsbeispiels wird die Erfindung weiter beschrieben. Es zeigen:
- Fig. 1: eine teilweise geschnittene Draufsicht auf die fertig montierte Vorrichtung,
- Fig. 2: eine Seitenansicht der Schmalseite einer Gehäusehalbschale,
- Fig. 3: eine Draufsicht auf die Außenseite einer Gehäusehalbschale,
- Fig. 4: eine Seitenansicht der Langseite einer Gehäusehalbschale,
- Fig. 5: eine Innenansicht einer Gehäusehalbschale,
- Fig. 6: eine Draufsicht auf die Außenseite der Scheibe der Schlüsselhalbwelle,
- Fig. 7: eine Draufsicht auf die Innenseite der Scheibe der Schlüsselhalbwelle,
- Fig. 8: eine Seitenansicht der Schlüsselhalbwelle,
- Fig. 8a-8e: Schnitte gemäß den Linien Vllla - Vllla bis Vllle - Vllle in Fig 8,
- Fig. 9: eine gegenüber der Darstellung aus Fig. 8 um 90° gedrehte Seitenansicht der Schlüsselhalbwelle,
- Fig.9a: eine Detaildarstellung einer Rastnase,
- Fig. 10: eine Draufsicht auf die Außenseite der Scheibe der Schloßhalbwelle,
- Fig. 11: eine Draufsicht auf die Innenseite der Scheibe der Schloßhalbwelle,
- Fig. 12: eine Seitenansicht der Schloßhalbwelle,
- Fig. 12a-12c: Schnitte gemäß den Linien Xlla - Xlla bis XIIc - XIIc in Fig. 12,
- Fig. 13: eine gegenüber der Darstellung aus Fig. 12 um 90° gedrehte Seitenansicht der Schloßhalbwelle,
- Fig. 13a: eine Detaildarstellung eines Verriegelungshakens,
- Fig. 13b: eine Detaildarstellung des Verriegelungshakens mit eingerastetem Rastvorsprung,
- Fig. 14: eine zweidimensionale Darstellung der beiden Halbwellen in Einschiebstellung,
- Fig. 15: eine zweidimensionale Darstellung der beiden Halbwellen in Verriegelungsstellung,
- Fig. 16: eine perspektivische Darstellung der Schlüsselhalbwelle und der Schloßhalbwelle teilweise vor dem Einschieben,
- Fig. 17: eine perspektivische Darstellung der Schlüsselhalbwelle und der Schloßhalbwelle teilweise beim Beginn des Einschiebevorgangs,
- Fig. 18: eine perspektivische Darstellung der Schlüsselhalbwelle und der Schloßhalbwelle teilweise während des Einschiebevorgangs.

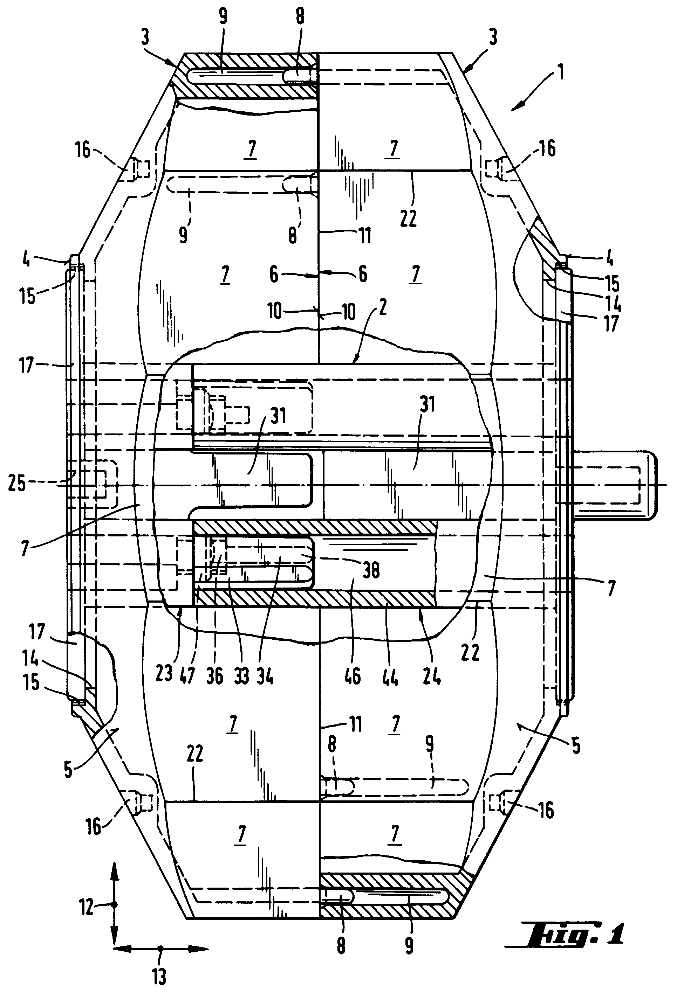

Die in Fig. 1 dargestellte, erfindungsmäßige Vorrichtung besteht im wesentlichen aus dem Gehäuse 1 und der Aufwickelwelle 2. Das Gehäuse 1 ist seinerseits aus den Gehäusehalbschalen 3 zusammengesetzt. Die Gehäusehalbschalen 3 sind schüsselförmig und haben jeweils einen planen Schüsselboden 4 und eine sich auswölbende Schüsselwand 5. Im wesentlichen senkrecht zu den Schüsselböden 4 verlaufen die Schüsselränder 6, die von insgesamt zwölf Planflächen 7 je Gehäusehalbschale 3 gebildet sind. Zur Zentrierung der Gehäusehalbschalen 3 aufeinander stehen aus den Schüsselrändern 6 Zentrierstifte 8 vor, die in entsprechende Zentrierbohrungen 9 an der jeweils anderen Gehäusehalbschale 3 hineinragen.

Die Gehäusehalbschalen 3 liegen mit den Stirnseiten 10 ihrer Schüsselränder 6 aufeinander und bilden zwischen sich die Teilfuge 11. Die Teilfuge 11 verläuft entlang der Langseite des Gehäuses 1 in Teilfugenlängsrichtung 12. Rechtwinklig zur Teilfugenlängsrichtung 12 verläuft die Axialrichtung 13, wobei die Teilfugenlängsrichtung 12 und die Axialrichtung 13 die Zeichenebene der Fig. 1 aufspannen.

In den Schüsselböden 4 sind die Lageraugen 14 zur Drehlagerung der Aufwickelwelle 2 ausgespart. Die Randbereiche 15 der Lageraugen 14 sind hierbei derart gekröpft, daß sie eine Bahnführung für die entsprechenden Lagerungselemente der Aufwickelwelle 2 bilden. In die Außenseite des Gehäuses 1 sind des weiteren Sacklöcher 16 zur Anbringung eines Griffbügels eingebohrt.

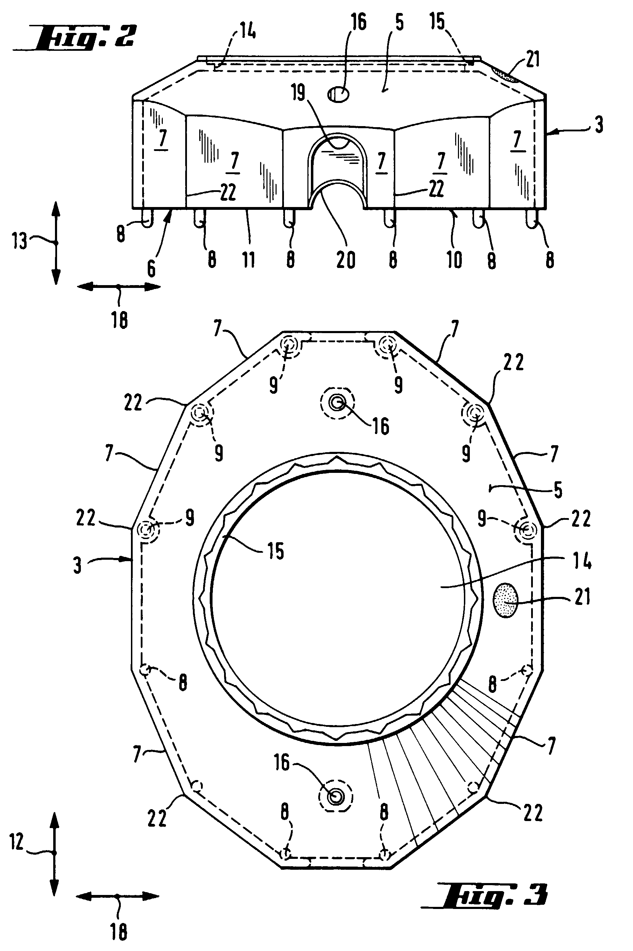

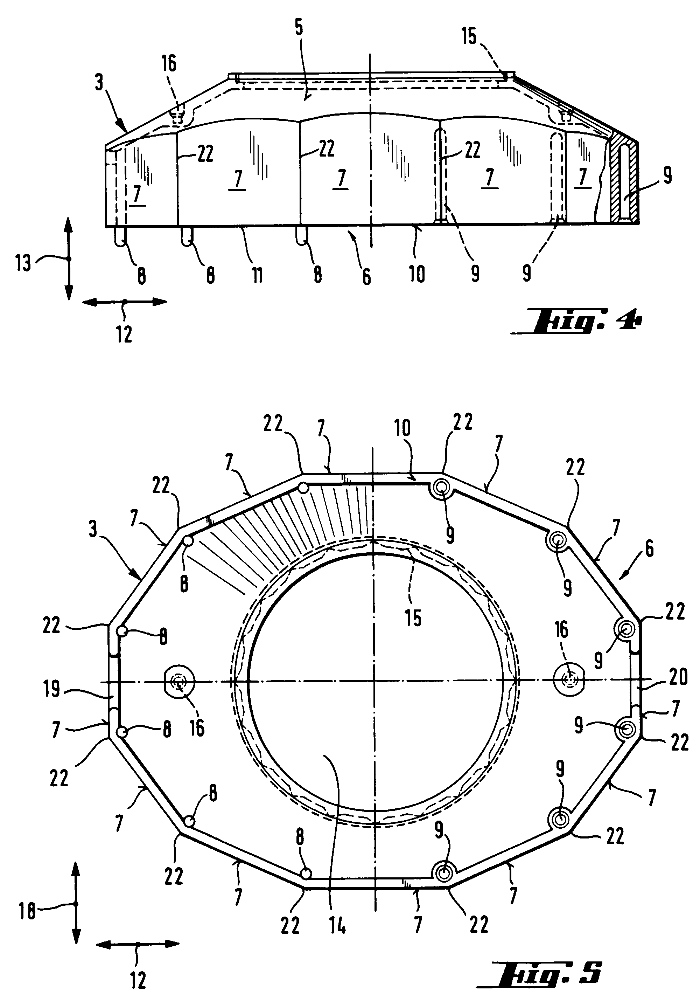

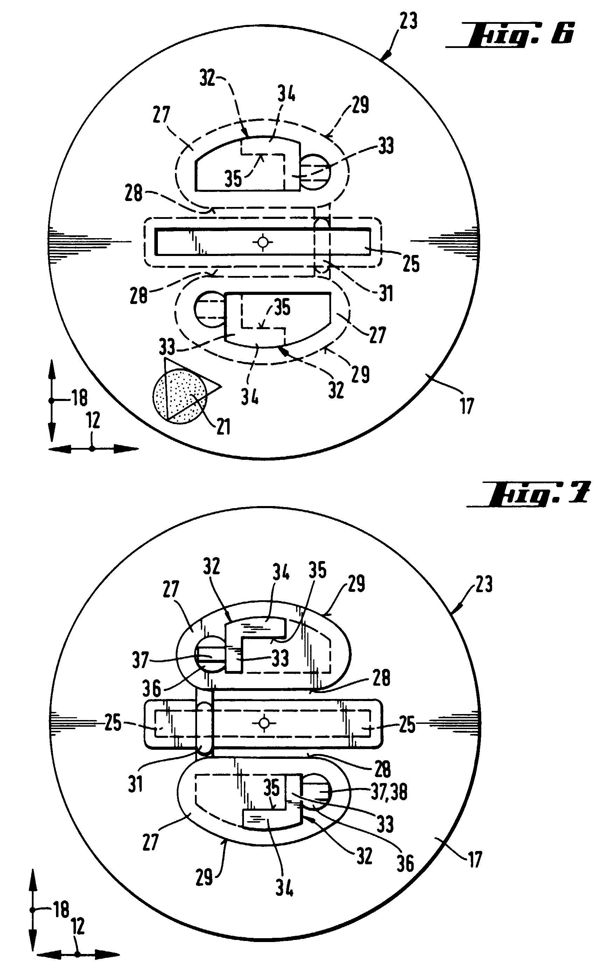

In Fig. 1 gestrichelt angedeutet ist die in Axialrichtung 13 verlaufende Aufwickelwelle 2. Die Aufwickelwelle 2 ist mit kreisrunden Scheiben 17 an ihren Wellenenden in den Randbereichen 15 der Lageraugen 14 drehbar gelagert. Die Zeichenebene von Fig. 2 wird von der Axialrichtung 13 und der Teilfugenquerrichtung 18 aufgespannt. Die Teilfugenquerrichtung 18 verläuft rechtwinklig zur Axialrichtung 13 und rechtwinklig zur Teilfugenlängsrichtung 12. In Fig. 2 ist die aus einer Planfläche 7 ausgebrochene Einlauföffnung 19 und die der Einlauföffnung 19 in Teilfugenlängsrichtung 12 gegenüberliegende Auslauföffnung 20 dargestellt. Der lichte Querschnitt der Einlauföffnung 19 ist hier erkennbar deutlich größer als der lichte Querschnitt der Auslauföffnung 20.

Die Zeichenebene der Fig. 3 wird von der Teilfugenlängsrichtung 12 und der Teilfugenquerrichtung 18 aufgespannt. Auf der in Fig. 3 dargestellten Draufsicht auf die Gehäusehalbschale 3 ist die zwölfeckige Querschnittsform der Gehäusehalbschale 3 mit den zwölf Planflächen 7 dargestellt. Fig. 3 zeigt zudem die Draufsicht auf die Randbereiche 15, die die Bahnführungen für die Scheiben 17 bei montierter Aufwickelwelle 2 bilden. Zudem ist auf der Außenseite der Gehäusehalbschale 3 die als Montagehilfe dienende Markierung 21 angebracht.

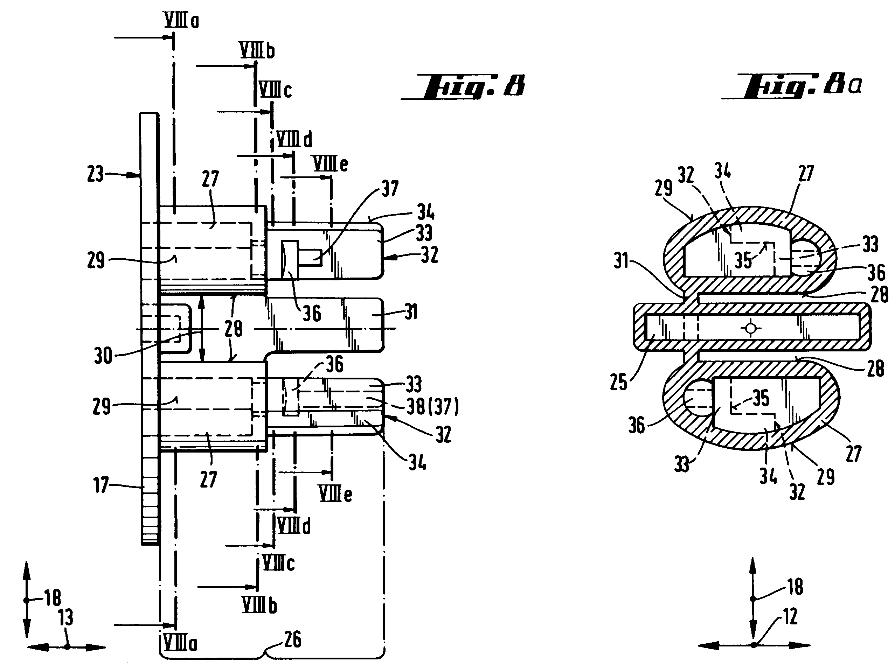

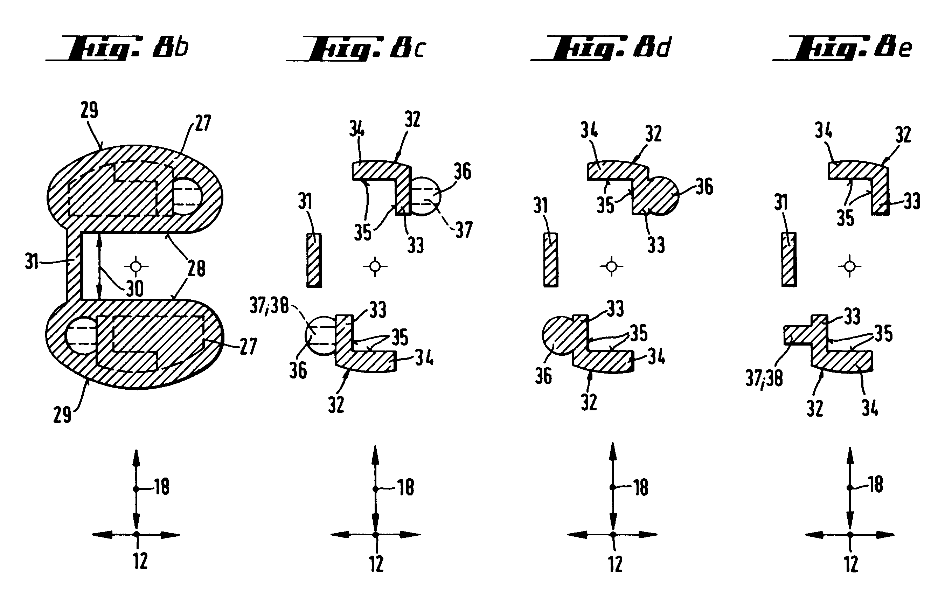

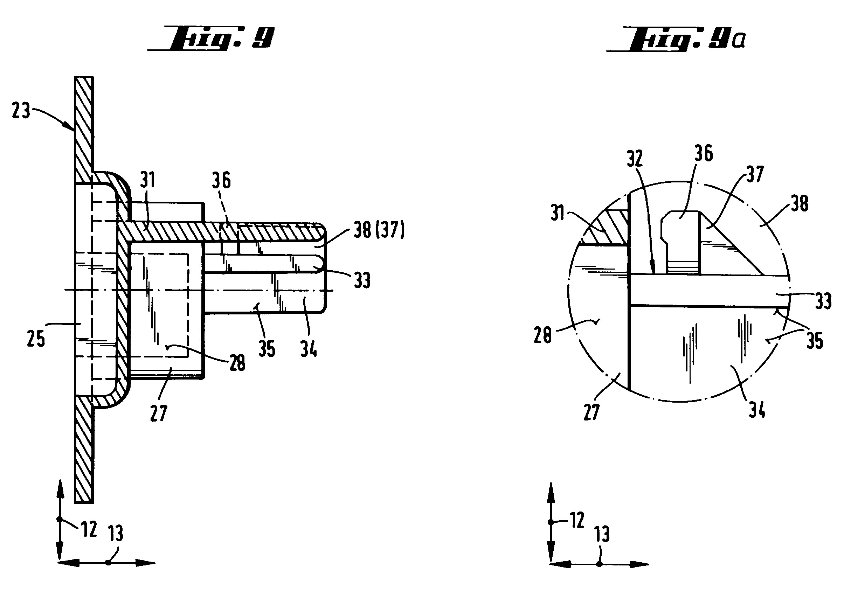

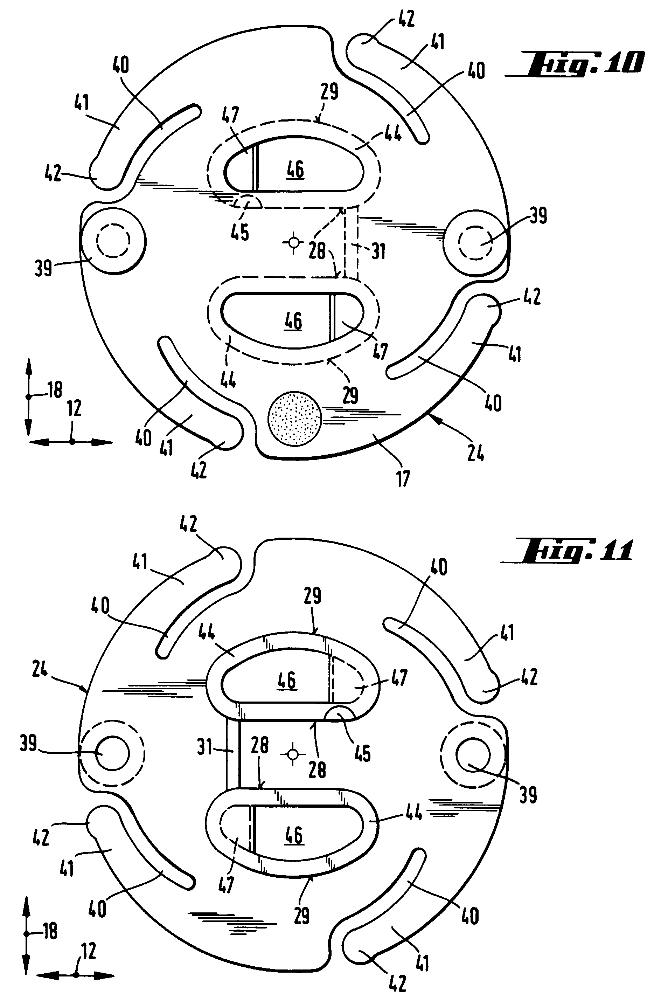

Fig. 4 zeigt die gegenüber der Fig. 2 um 90° um eine Axialrichtung 13 verlaufende Achse gedrehte Seitenansicht der Gehäusehalbschale 3, so daß die Axialrichtung 13 und die Teilfugenlängsrichtung 12 die Zeichenebene der Fig. 4 aufspannen. Die Draufsicht auf die Innenseite der Gehäusehalbschale 3 nach Fig. 5 und die Fig. 4 zeigen, daß in den von den Planflächen 7 gebildeten Kantenbereichen 22 jeweils zur Hälfte Zentrierstifte 8 und Zentrierbohrungen 9 als Aufnahmen für die Zentrierstifte 8 angebracht sind. Aufgrund dieser Anordnung der Zentrierstifte 8 und der Zentrierbohrungen 9 ist es möglich, zwei baugleiche Gehäusehalbschalen 3 bezüglich der Teilfuge 11 und der Aufwickelwelle 2 spiegelverkehrt zu montieren. Wie in Fig. 1 dargestellt, greifen die Zentrierstifte 8 der einen Gehäusehalbschale 3 beim komplett montierten Gehäuse 1 in die entsprechenden Zentrierbohrungen 9 der anderen Gehäusehalbschale 3.

Die in Fig. 1 im Montageendzustand dargestellte Aufwickelwelle 2 besteht aus der Schlüsselhalbwelle 23 und der Schloßhalbwelle 24. Fig. 6 zeigt die Außenseite der Scheibe 17 der Schlüsselhalbwelle 23. In die Außenseite der Scheibe 17 der Schlüsselhalbwelle 23 ist der Münzschlitz 25 als Montagehilfe eingearbeitet. Ferner ist auf der Außenseite der Scheibe 17 der Schlüsselhalbwelle 23 die Markierung 21 als Montagehilfe angebracht.

Fig. 7 zeigt die Draufsicht auf die Innenseite der Schlüsselhalbwelle 23 mit den Rastelementen. Die Rastelemente der Schlüsselhalbwelle 23 sollen anhand der Fig. 7 und Fig. 8 erläutert werden.

Die Schlüsselhalbwelle 23 besteht aus dem eigentlichen Schlüsselhalbwellenbereich 26 und der flanschartig an einem Wellenende angebrachten Scheibe 17. Der Schlüsselhalbwellenbereich 26 erstreckt sich hierbei in Axialrichtung 13. In Axialrichtung 13 neben der Scheibe 17 sind die Distanzelemente 27 angebracht. Die Distanzelemente 27 haben gemäß Schnitt VIIIa und VIIIb jeweils eine flachovale Umrißform, wobei die Flachseiten 28 der Distanzelemente 27 einander zugewandt angeordnet sind. Die den Flachseiten 28 abgewandten Außenrundseiten 29 bilden hierbei eine Aufwickelfläche für das fadenartige Gut. Die Flachseiten 28 der Distanzelemente 27 sind derart beabstandet angeordnet, daß sie zwischen sich den Fixierschlitz 30 für das aufzuwickelnde fadenartige Gut bilden. Der Fixierschlitz 30 ist an seiner einen Randseite von der schwertförmigen Leiste 31 begrenzt. Die Leiste 31 verbindet die beiden Distanzelemente 27 miteinander und erstreckt sich in Axialrichtung 13.

An die Distanzelemente 27 schließen sich in Axialrichtung 13 die L-förmigen Schienen 32 an. Die L-förmigen Schienen 32 bestehen aus dem Tragschenkel 33 und dem Führungsschenkel 34 (siehe Schnitte Fig. 8c, Fig. 8d, Fig. 8e). Die Schienen 32 sind zueinander punktsymmetrisch angeordnet, wobei der Symmetriepunkt auf der in Axialrichtung 13 verlaufenden Mittellängsachse der Aufwickelwelle 2 liegt. Die Schienen 32 sind an der Schlüsselhalbwelle 23 so angeordnet, daß ihre Schieneninnenseiten 35 einander zugewandt sind.

In einigem Abstand in Axialrichtung 13 zu den Distanzelementen 27 tragen beide Schienen 32 auf den den Schieneninnenseiten 35 abgewandten Außenseiten der Tragschenkel 33 Rastnasen 36. Die Rastnasen 36 sind hierbei von in Axialrichtung 13 verlaufenden Stützen 37 abgestützt. Die eine Stütze 37 bildet hierbei die Stützrippe 38, die senkrecht aus der der Schieneninnenseite 35 abgewandten Außenseite des Tragschenkels 33 senkrecht hinaussteht. Die Stützrippe 38 erstreckt sich hierbei in Axialrichtung 13 von der Rastnase 36 bis zu dem der Scheibe 17 abgewandten Wellenende der Schlüsselhalbwelle 23.

Fig. 9a zeigt die Stütze 37 mit ihrem Dreiecksquerschnitt. Die Katheten des Dreiecks bilden der Tragschenkel 33 und die Rastnase 36, welche von der Hypotenuse miteinander verbunden sind.

Fig. 10 zeigt die Draufsicht auf die Außenseite der Scheibe 17 der Schloßhalbwelle 24. Aus der Außenseite der Scheibe 17 der Schloßhalbwelle 24 stehen in Axialrichtung 13 Drehknäufe 39 zum Drehantrieb der Aufwickelwelle 2 hinaus. Des weiteren ist auf der Außenseite der Scheibe 17 der Schloßhalbwelle 24 die Markierung 21 angebracht. Die Scheibe 17 der Schloßhalbwelle 24 ist mit radialen Schlitzen 40 geschlitzt. Die radialen Schlitze 40 werden an ihrer Innenseite von der Scheibe 17 und an ihrer Außenseite von Federarmen 41 flankiert. Die Federarme 41 tragen an ihren Freienden Bremsbacken 42. Im Montageendzustand liegen die Bremsbacken 42 an den Randbereichen 15 der Lageraugen 14 an und erschweren die Drehbarkeit der Aufwickelwelle 2, um die Beibehaltung einer voreingestellten Wellendrehstellung zu gewährleisten.

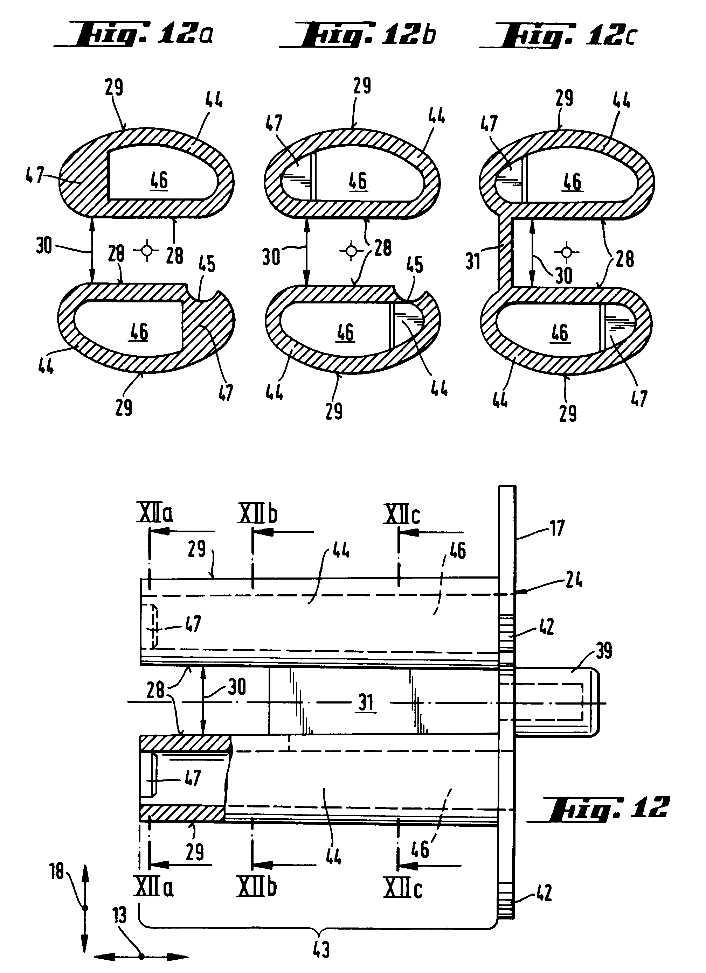

In Fig. 11 ist die Draufsicht auf die Innenseite der Scheibe 17 der Schloßhalbwelle 24 dargestellt. Der Aufbau der Schloßhalbwelle 24 sei im folgenden anhand der Fig. 11 und Fig. 12 erklärt:

Die Schloßhalbwelle 24 besteht- ebenso wie die Schlüsselhalbwelle 23 - aus einem sich in Axialrichtung 13 erstreckenden Schloßhalbwellenbereich 43 und an einem Wellenende aus der flanschartig sich an den Schloßhalbwellenbereich 43 anschließenden Scheibe 17. Aus der Scheibe 17 stehen in Axialrichtung 13 gabelartig die beiden geschlossenen Bahnführungen 44 hinaus. Die Außenwandquerschnitte der Bahnführungen 44 entsprechen der Form der Distanzelemente 27. Die Außenwandquerschnitte der Bahnführungen 44 sind entsprechend flachoval und auch die Bahnführungen 44 sind mit ihren Flachseiten 28 einander zugewandt angeordnet. Ebenso wie die Distanzelemente 27 bilden die Bahnführungen 44 zwischen ihren Flachseiten 28 einen Fixierschlitz 30 für das fadenartige Gut. Analog zu den Distanzelementen 27 sind auch die Bahnführungen 44 durch eine randseitig den Fixierschlitz 30 verschließende Leiste 31 miteinander verbunden. Auch die den Flachseiten 28 abgewandten Außenrundseiten 29 der Bahnführungen 44 dienen als Aufwickelfläche für das fadenartige Gut.

Im Unterschied zu den Distanzelementen 27 ist in die Flachseite 28 einer Bahnführung 44 eine Führungsnut 45 eingeformt. Die Führungsnut 45 erstreckt sich jedoch nicht über die gesamte Länge des Schloßhalbwellenbereichs 43 in Axialrichtung 13.

Die Bahnführungen 44 weisen einen flachovalen Hohlquerschnitt 46 auf. Im Bereich des der Scheibe 17 abgewandten Wellenendes ist der Hohlquerschnitt 46 der Bahnführungen 44 teilweise verschlossen durch die als Plattenelemente ausgeführten Verriegelungshaken 47. Die Bahnführungen 44 sind punktsymmetrisch zueinander angeordnet, so daß die Verriegelungshaken 47 in Teilfugenquerrichtung 18 in unterschiedliche Richtungen weisen.

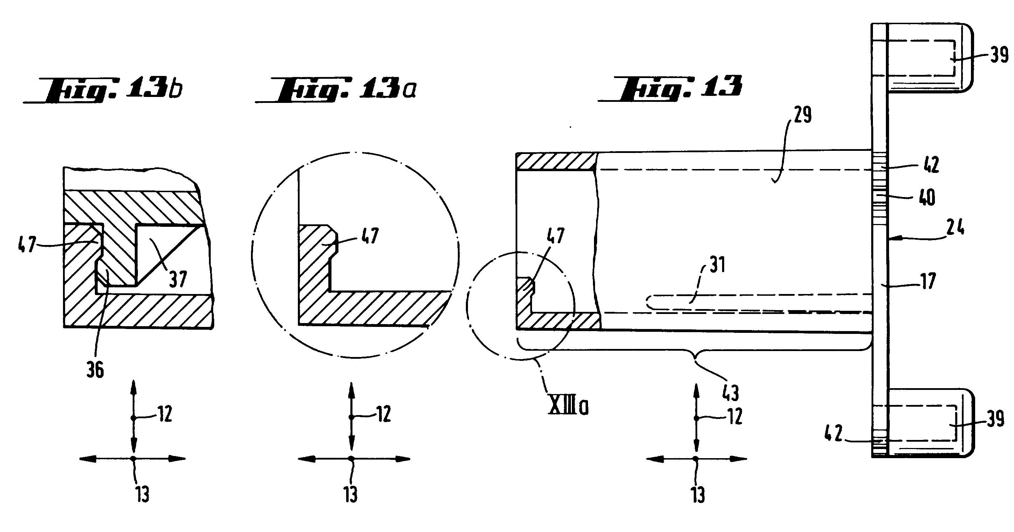

Die Schnittdarstellung Fig. 12a zeigt das der Scheibe 17 abgewandte Wellenende der Schloßhalbwelle 24 mit den Verriegelungshaken 47. Die Schnittdarstellung Fig. 12b zeigt den flachovalen Innenhohlquerschnitt 46. Ebenso wie bei der Schnittdarstellung Fig. 12a weist auch die Flachseite 28 der einen, in der Darstellung der Zeichnung unteren, Bahnführung 44 die Führungsnut 45 auf. Die Schnittdarstellung Fig. 12c zeigt den der Scheibe 17 benachbarten Bereich der Schloßhalbwelle 24. Die Führungsnut 45 ist hier an der Flachseite 28 nicht vorhanden. In dem in der Schnittdarstellung Fig. 12c dargestellten Bereich ist die die Flachseiten 28 der Bahnführungen 44 verbindende Leiste 31 erkennbar. Gegenüber der Darstellung in Fig. 12 ist die Schloßhalbwelle 24 in der Darstellung der Fig. 13 um 90° um ihre in Axialrichtung 13 verlaufende Mittellängsachse verdreht. In der Darstellung der Fig. 13 ist insbesondere der Verriegelungshaken 47 erkennbar. Der Verriegelungshaken 47 ist in Fig. 13a nochmals vergrößert dargestellt. Die Darstellung der Fig. 13b zeigt den Verriegelungshaken 47 und die Rastnase 36 in ihrer Verriegelungsstellung. Der Verriegelungshaken 47 hintergreift hierbei die Rastnase 36 formschlüssig,
wodurch die Verschieblichkeit der Schlüsselhalbwelle 23 und der Schloßhalbwelle 24 in Axialrichtung 13 gegeneinander aufgehoben ist.

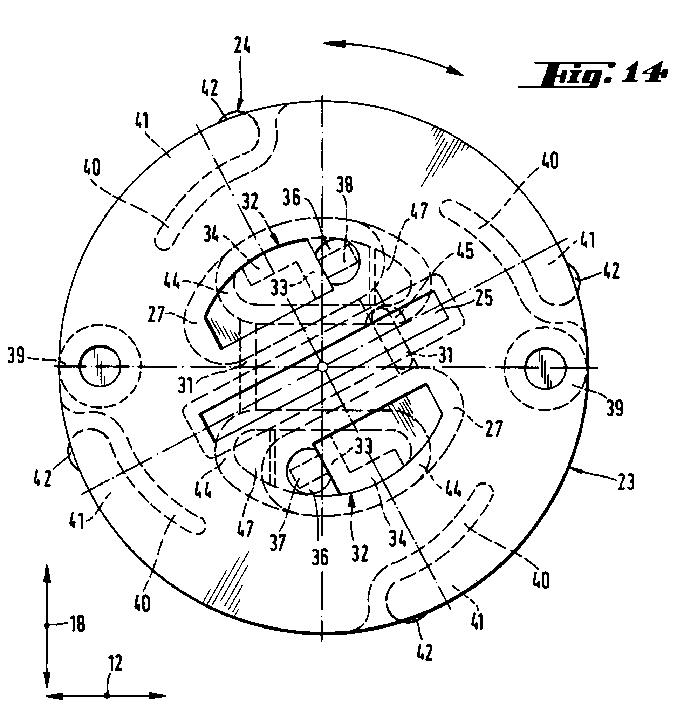

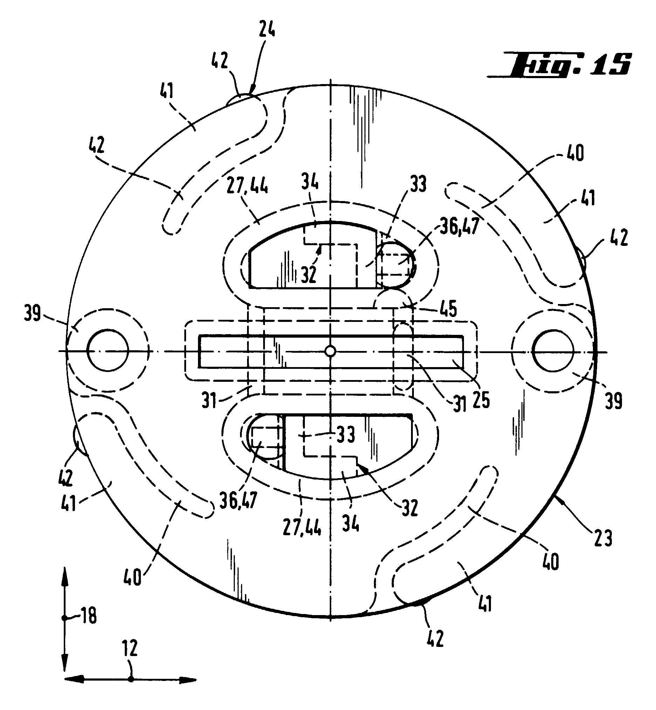

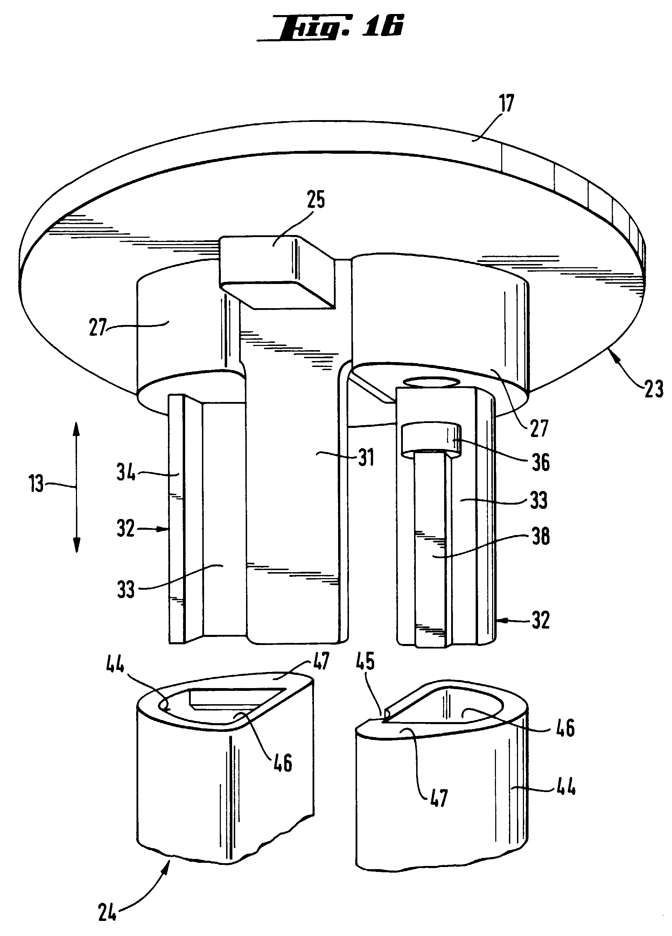

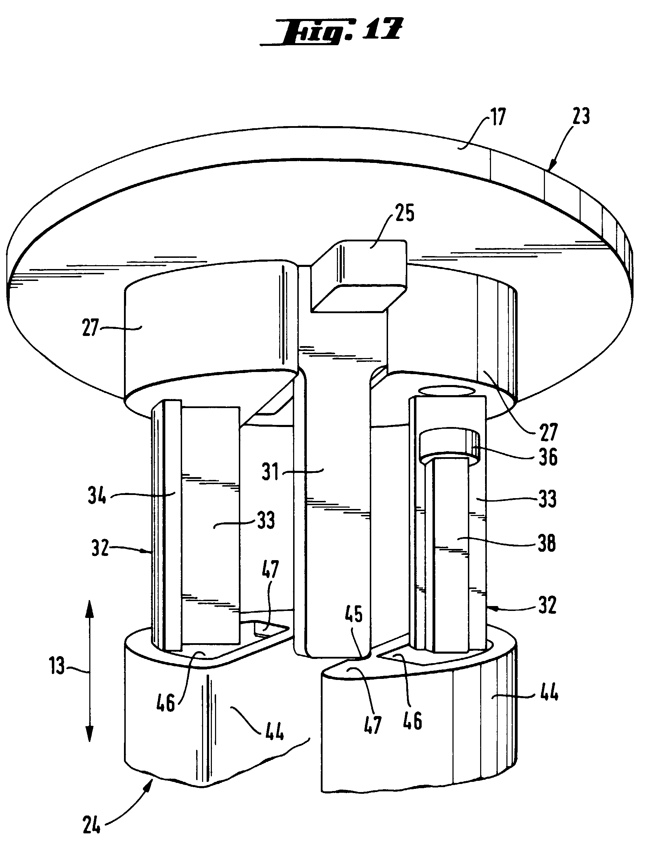

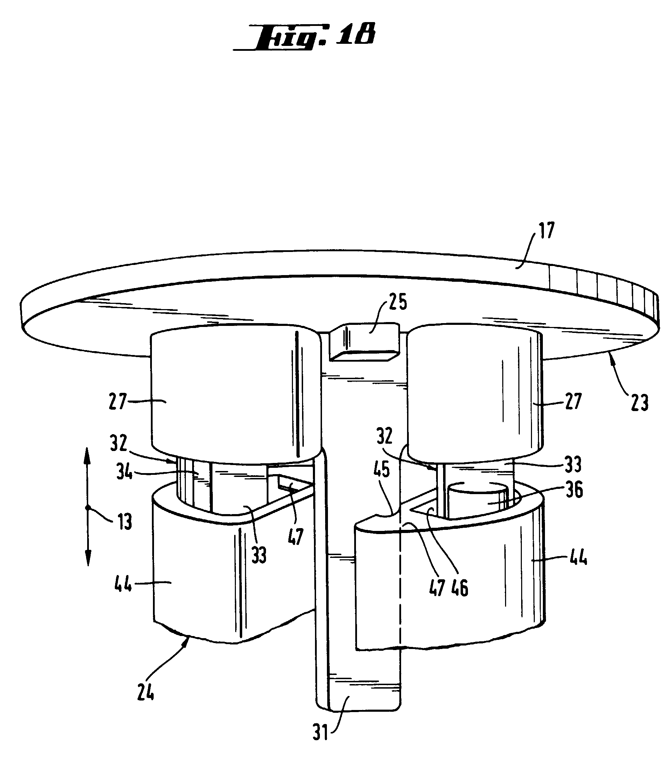

Die Montage der Vorrichtung verläuft folgendermaßen:
1. Eine der Gehäusehalbschalen 3 wird vorzugsweise in die linke Hand genommen. Mit der rechten Hand wird ein straffgezogener Strang des aufzuwickelnden fadenartigen Gutes derart in die Gehäusehalbschale 3 eingelegt, daß er sowohl in der Einlauföffnung 19 als auch in der Auslauföffnung 20 einliegt. Die Gehäusehalbschale 3 und der Strang werden mit der linken Hand festgehalten.
2. Mit der rechten Hand wird die zweite Gehäusehalbschale 3 spiegelverkehrt auf die in der linken Hand gehaltene Gehäusehalbschale 3 aufgesetzt derart, daß die Zentrierstifte 8 der einen Gehäusehalbschale 3 in die entsprechenden Zentrierbohrungen 9 der anderen Gehäusehalbschale 3 gleiten. Das so fertig montierte Gehäuse wird wiederum mit der linken Hand festgehalten.
3. Die Schloßhalbwelle 24 wird mit ihren gabelartig vorstehenden Bahnführungen 44 durch ein Lagerauge 14 in das Gehäuse mit der rechten Hand eingeschoben. Hierbei ist die Scheibe 17 der Schloßhalbwelle 24 in die Position gedreht, in der die eine Markierung 21 auf der Außenseite des Gehäuses 1 in Teilfugenquerrichtung 18 auf einer geraden Linie mit der Markierung 21 auf der Außenseite der Scheibe 17 der Schloßhalbwelle 24 liegt. In dieser Funktionsstellung ist sichergestellt, daß die Flachseiten 28 der Bahnführungen 44 in Teilfugenlängsrichtung 12 orientiert sind, so daß die Bahnführungen 44 den zwischen der Einlauföffnung 19 und der Auslauföffnung 20 verlaufenden Fadenstrang flankieren.
4. Die Vorrichtung wird in der linken Hand umgedreht, so daß das der Scheibe 17 der Schloßhalbwelle 24 gegenüberliegende, offene Lagerauge 14 nach oben zu liegen kommt. Als letzter Arbeitsgang wird die Schlüsselhalbwelle 23 in die Schloßhalbwelle 24 und damit in die Vorrichtung eingeschoben. Die Fig. 16,17 und 18 zeigen den Einschiebevorgang der beiden Halbwellen ineinander, also ohne das Gehäuse 1. Vor dem Einschieben wird die Scheibe 17 der Schlüsselhalbwelle 23 derart positioniert, daß die Markierung 21 auf der Außenseite der Scheibe 17 der Schlüsselhalbwelle 23 so positioniert ist, daß sie mit der entsprechenden Markierung 21 auf der Gehäuseaußenseite auf einer in Teilfugenquerrichtung 18 verlaufenden Geraden liegt. Die Schlüsselhalbwelle 23 wird gemäß der Darstellung von Fig. 16 in das Gehäuse 1 eingeschoben und greift mit seinen Schienen 32 gemäß der Darstellung in Fig. 17 in die Hohlquerschnitte 46 der Bahnführungen 44. Bei der Positionierung der Schlüsselhalbwelle 23 ist darauf zu achten, daß die aus der Scheibe 17 der Schlüsselhalbwelle 23 vorstehende Leiste 31 der aus der Scheibe 17 der Schloßhalbwelle 24 abstehenden Leiste 31 gegenüberliegend angeordnet wird. Hierfür sind die Führungsnut 45 und die Stützrippe 38 vorgesehen. Die Stützrippe 38 liegt gemäß der Darstellung von Fig. 17 mit ihrer aus dem Tragschenkel 33 vorstehenden Schmalseite an der Schmalseite des Verriegelungshakens 47 an. Durch diese Anlage der Stützrippe 38 am Verriegelungshaken 47 wird die Leiste 31 in die Führungsnut 45 eingeschwenkt. Durch die in der Führungsnut 45 in Axialrichtung 13 gleitende Leiste 31 und die entlang der Schmalseite des Verriegelungshakens 47 in Axialrichtung 13 entlanggleitende Stützrippe 38 ist die Schlüsselhalbwelle 23 derart zwangsgeführt, daß sie gegenüber der Schloßhalbwelle 24 nicht verdrehbar ist.
5. Die Zwangsführung durch die Leiste 31 und die Führungsnut 45 einerseits und die Stützrippe 38 und den Verriegelungshaken 47 andererseits ist erst aufgehoben, sobald die Stirnseiten der Distanzelemente 27 auf den Stirnseiten der Bahnführungen 44 aufliegen. In diesem Aufliegezustand muß die Schloßhalbwelle 24 entweder arretiert oder festgehalten werden und die Schlüsselhalbwelle 23 gegenüber der Schloßhalbwelle 24 im Uhrzeigersinn so lange verdreht werden, bis die Rastnasen 36 die Verriegelungshaken 47 gemäß der Darstellung in Fig. 13b hintergriffen haben. Die Schloßhalbwelle 24 und die Schlüsselhalbwelle 23 müssen also aus ihrer Einschiebstellung gemäß Fig. 14 in ihre Verriegelungsstellung gemäß Fig. 15 gegeneinander verdreht werden. Der zwischen den Verriegelungshaken 47 und den Rastnasen 36 wirksame Formschluß schließt nicht nur die Schlüsselhalbwelle 23 und die Schloßhalbwelle 24 zur Aufwickelwelle 2 zusammen sondern verspannt auch über den flanschartigen Scheiben 17 die Gehäusehalbschalen 3 zum Gehäuse 1 miteinander.

## Patentansprüche

1. Aufwickelvorrichtung für fadenartiges Gut
- mit einem aus zwei Gehäusehalbschalen (3) zusammensetzbaren Gehäuse (1) und
- mit einer im Gehäuse drehbar gelagerten, aus zwei in das bereits zusammengesetzte Gehäuse (1) von zwei verschiedenen Seiten her einschiebbaren Halbwellen (23) gebildeten Aufwickelwelle (2),
dadurch gekennzeichnet,
daß im Montageendzustand
- die beiden Halbwellen (23,24) nach Art des Schloß-Schlüssel-Prinzips unmittelbar formschlüssig miteinander verrastet sind und
- die Aufwickelwelle (2) die beiden Gehäusehalbschalen (3) im Montageendzustand miteinander verspannt.

2. Vorrichtung nach Anspruch 1,
dadurch gekennzeichnet,
daß das Gehäuse (1) aus zwei baugleichen, spiegelverkehrt montierbaren, schüsselförmigen Gehäusehalbschalen (3) besteht mit jeweils einem planen Schüsselboden (4) und jeweils einer vom Schüsselboden (4) abstehenden, sich auswölbenden Schüsselwand (5).

3. Vorrichtung nach Anspruch 2,
dadurch gekennzeichnet,
- daß die planen Schüsselböden (4) die Gehäuseseitenwände bilden und
- daß die Schüsselböden (4) von kreisrunden Lageraugen (14) zur drehbaren Lagerung der Aufwickelwelle (2) durchbrochen sind.

4. Vorrichtung nach Anspruch 3,
dadurch gekennzeichnet,
- daß die etwa senkrecht zu den Schüsselböden (4) verlaufenden Schüsselränder (6) aus zwölf aneinandergesetzten Planflächen (7) bestehen,
- daß in den zwischen den Planflächen (7) gebildeten Kantenbereichen (22) Zentrierelemente (8,9) für die Gehäusemontage angebracht sind und
- daß die Gehäusehalbschalen (3) im Montageendzustand mit den Stirnseiten ihrer Schüsselränder (6) aufeinanderliegen zur Bildung einer Aufwickelkammer für das fadenartige Aufwickelgut.

5. Vorrichtung nach Anspruch 4,
dadurch gekennzeichnet,
daß die Zentrierelemente teilweise von Zentrierstiften (8) und teilweise von Zentrierbohrungen (9) gebildet sind derart, daß im Montageendzustand jeweils ein Zentrierstift (8) der einen Gehäusehalbschale (3) in jeweils eine Zentrierbohrung (9) der zweiten Gehäusehalbschale (3) eingeschoben ist zur Zentrierung der Gehäusehalbschalen (3) aufeinander.

6. Vorrichtung nach einem oder mehreren der vorhergehenden Ansprüche,
gekennzeichnet durch
Ausbrechungen der Schüsselränder (6) an zwei einander vorzugsweise gegenüberliegenden Bereichen als Einlauföffnung (19) und als Auslauföffnung (20) für das fadenartige Gut, wobei die Öffnungsquerschnitte der Ausbrechungen unterschiedlich groß sind.

7. Vorrichtung nach einem oder mehreren der vorhergehenden Ansprüche,
dadurch gekennzeichnet,
- daß die Aufwickelwelle (2) bildenden Halbwellen (23,24) nach Art eines Flansches an einem ihrer Wellenenden jeweils eine Scheibe (17) tragen und
- daß der Durchmesser der Scheiben (17) größer ist als der Durchmesser der Lageraugen (14) derart, daß im Montageendzustand die Scheiben (17) als Axiallager der Aufwickelwelle (2) wirksam sind.

8. Vorrichtung nach Anspruch 7,
dadurch gekennzeichnet,
daß die Randbereiche (15) der Lageraugen (14) derart gekröpft sind, daß eine dem Durchmesser der Scheiben (17) entsprechende offene Bahnführung für die Scheiben (17) gebildet ist.

9. Vorrichtung nach Anspruch 8,
dadurch gekennzeichnet,
- daß die Scheiben (17) zur Bildung von Federarmen (41) tangential geschlitzt sind,
- daß die Federarme (41) an ihren Freienden Bremsbacken (42) tragen und
- daß die Federarme (41) mit ihren Bremsbacken (42) im Montageendzustand an den Randbereichen (15) der Bahnführung unter Druck anliegen zur Erschwerung der Drehbarkeit der Aufwickelwelle (2).

10. Vorrichtung nach einem oder mehreren der vorhergehenden Ansprüche,
dadurch gekennzeichnet,
- daß eine Halbwelle eine Schlüsselhalbwelle (23) ist mit Rastelementen an dem der Scheibe (17) entgegengesetzten Wellenende,
- daß die zweite Halbwelle eine Schloßhalbwelle (24) ist mit komplementär zu den Rastelementen ausgebildeten Aufnahmeelementen an dem der Scheibe (17) entgegengesetzen Wellenende und
- daß zur Montage der Aufwickelwelle (2)
-- die Rastelemente in die Aufnahmeelemente einschiebbar sind und
-- im vollständig eingeschobenen Zustand der Rastelemente die Schloßhalbwelle (23) und die Schlüsselhalbwelle (24) derart gegeneinander verdrehbar sind, daß die Rastelemente nach Art eines Bajonettverschlusses in die Aufnahmeelemente einrasten.

11. Vorrichtung nach Anspruch 10,
dadurch gekennzeichnet,
- daß die Rastelemente im wesentlichen aus in Axialrichtung (13) aus der Scheibe (17) abstehenden Schienen (32) und auf den Schienen (32) fixierten, quer zur Axialrichtung (13) abstehenden Rastnasen (36) bestehen und
- daß die Aufnahmeelemente aus geschlossenen, in Axialrichtung (13) aus der Scheibe (17) abstehenden Bahnführungen (44) für die Schienen (32) und quer zur Axialrichtung (13) in die Bahnführungen (44) hineinragenden Verriegelungshaken (47) bestehen.

12. Vorrichtung nach Anspruch 11,
dadurch gekennzeichnet,
- daß die Schlüsselhalbwelle (23) zwei punktsymmetrisch zueinander angeordnete, mit ihren Innenseiten einander zugewandte, im wesentlichen L-förmige Schienen (32) aufweist,
-- wobei der eine L-Schenkel einen Tragschenkel (33) für die an seiner Außenseite angeformte Rastnase (36) ist und
-- wobei der andere L-Schenkel ein Führungsschenkel mit einer abgerundeten Führungsfläche an seiner Außenseite ist, und
- daß die Schloßhalbwelle (24) entsprechend zwei punktsymmetrisch zueinander angeordnete Bahnführungen (44) mit flachovalem Hohlquerschnitt (46) aufweist,
-- wobei die Flachseiten ihrer Hohlquerschnitte (46) einander zugewandt sind,
-- wobei die Flächen ihrer ausgerundeten Seiten zusammen mit den Führungsflächen der Führungsschenkel (34) als Gleitführungen wirksam sind und
-- wobei die Verriegelungshaken (47) die Hohlquerschnitte (46) an dem der Scheibe (17) abgewandten Wellenende teilweise verschließen.

13. Vorrichtung nach Anspruch 12,
dadurch gekennzeichnet,
- daß die Rastnasen (36) von im wesentlichen lotrecht und mittig auf den Tragschenkeln (33) angeordneten Stützen (37) gegen axiale Krafteinwirkung abgestützt sind,
-- wobei die eine Stütze (37) derart dreieckig ist, daß ihre beiden Katheten an der Rastnase (36) und am Tragschenkel (33) anliegen und ihre Hypotenuse gegenüber dem von der Rastnase (36) und vom Tragschenkel (33) gebildeten Winkel verläuft und
-- wobei die andere Stütze (37) eine sich lotrecht von der Rastnase (36) bis zum Schlüsselwellenende am Tragschenkel (33) erstreckende Stützrippe (38) ist und
- daß die Bahnführungen (44) einen ihrem Hohlquerschnitt (46) entsprechenden, flachovalen Außenwandquerschnitt aufweisen,
-- wobei die Außenflachseiten (28) einander zugewandt angeordnet sind und zur Bildung eines Fixierschlitzes (30) für das fadenartige Gut zwischen sich beabstandet sind und
-- wobei in nur einer Außenflachseite (28) eine Führungsnut (45) ausgespart ist.

14. Vorrichtung nach Anspruch 13,
dadurch gekennzeichnet,
- daß an der Schlüsselhalbwelle (23) eine senkrecht zur den Führungsschenkeln (34) angeordnete, sich in Axialrichtung (13) erstreckende schwertförmige Leiste (31) aus der Scheibe (17) lotrecht vorsteht,
- daß an der Schloßhalbwelle (24) ebenfalls eine den Fixierschlitz (30) zwischen den Bahnführungen (44) an einer Seite randseitig verschließende, schwertförmige Leiste (31) aus der Scheibe (17) lotrecht vorsteht und
- daß die Leiste (31) der Schlüsselhalbwelle (23) während des Einschiebens der Schlüsselhalbwelle (23) in die Schloßhalbwelle (24) teilweise in der Führungsnut (45) gleitet.

15. Vorrichtung nach einem oder mehreren der vorhergehenden Ansprüche,
dadurch gekennzeichnet,
- daß an der Schlüsselhalbwelle (23) in Axialrichtung (13) zwischen der Scheibe (17) und den Schienen (32) jeweils flachovale, mit ihren Flachseiten (28) einander zugewandte Distanzelemente (27) angebracht sind, die einen Fixierschlitz (30) für das fadenartige Gut zwischen sich bilden und
- daß der Querschnitt jeweils eines Distanzelements (27) und der Außenwandquerschnitt jeweils einer Bahnführung (44) gleich ist derart, daß die einander abgewandten Außenrundseiten (29) der Distanzelemente (27) und der Bahnführungen (44) im Montageendzustand der Aufwickelwelle (2) zwei in Axialrichtung (13) durchgängige, halbrunde Aufwickelflächen für das fadenartige Gut bilden.

16. Vorrichtung nach Anspruch 15,
dadurch gekennzeichnet,
- daß die axiale Länge der Leiste (31) an der Schlüsselhalbwelle (23) der axialen Länge der Schienen (32) entspricht,
- daß die axiale Länge der Leiste (31) an der Schloßhalbwelle (24) der axialen Länge der Bahnführungen (44) entspricht und
- daß im Montageendzustand der Aufwickelwelle (2) die Stirnseiten der Distanzelemente (27) und die Stirnseiten der Bahnführungen (44) aneinanderliegen, wobei jeweils eine Leiste (31) jeweils eine offene Randseite des zwischen den Distanzelementen (27) und den Bahnführungen (44) gebildeten Fixierschlitzes (30) bis auf eine der Axiallänge der Distanzelemente (27) entsprechende Durchtrittsöffnung verschließt derart, daß die Distanzelemente (27) und die Bahnführungen (44) einerseits und die Leisten (31) andererseits einen Hohlkanal zur Fixierung des fadenartigen Gutes zwischen sich bilden.

17. Vorrichtung nach den Ansprüchen 1 bis 16,
gekennzeichnet
- durch eine Einschiebstellung der beiden Halbwellen (23,24) derart,
-- daß die Führungsschenkel (34) gleitend an den Führungsflächen anliegen,
-- daß die Stützrippe (38) mit ihrer Schmalseite zur Lagesicherung an der Schmalseite eines Verriegelungshakens (47) anliegt und
-- daß die Leiste (31) der Schlüsselhalbwelle (23) in der Führungsnut (45) der Außenflachseite (28) der Bahnführung (44) gleitet,
-- wobei ein Fadenstrang des fadenartigen Gutes zwischen den gabelartig aus der Scheibe (17) der Schloßhalbwelle (24) vorstehenden Bahnführungen (44) einliegt und
- durch eine Verriegelungsstellung der Halbwellen (23,24) derart,
-- daß die Verriegelungshaken (47) die Rastnasen (36) hintergreifen und
-- daß der Fadenstrang durch die schlüsselhalbwellenseitige Durchtrittsöffnung in den Hohlkanal einlaufend und durch die schloßhalbwellenseitige Durchtrittsöffnung aus dem Hohlkanal auslaufend den Hohlkanal durchsetzt.

18. Vorrichtung nach Anspruch 17,
dadurch gekennzeichnet,
- daß auf den Außenseiten des Gehäuses (1) Sacklöcher (16) zur Anbringung eines Griffbügels vorgesehen sind,
- daß auf den Außenseiten des Gehäuses (1) vorzugsweise farbige Markierungen (21) als Montagehilfen erhaben angebracht sind und
- daß auf den Außenseiten der Scheiben (17) ebenfalls vorzugsweise farbige Markierungen (21) erhaben angebracht sind derart, daß in der Einschiebstellung die Markierungen (21) auf einer gedachten gemeinsamen Linie stehen.

19. Vorrichtung nach Anspruch 18,
gekennzeichnet,
- durch aus den Außenseiten der Scheiben (17) hinausstehende Bedienungselemente, vorzugsweise Drehknäufe (39), und
- durch einen Münzschlitz in der Außenseite einer Scheibe (17) zum Einstecken einer Münze als Montagehilfe beim Verdrehen der Halbwellen (23,24) gegeneinander.

## Claims

1. A coiling device for cordlike material,
- having a housing (1) that can be put together from two half housing shells (3), and
- having a coiling shaft (2) rotatably supported in the housing (1) and formed from two half shafts (23,24), which are insertable from two different sides into the already assembled housing (1)
characterized in that
in the finally assembled state
- the two half shafts (23,24) are directly locked together form-fittingly in the manner of the lock and key principle, and
- the coiling shaft (2) braces the two half housing shells (3) together.

2. The device of claim 1,
characterized in that
the housing (1) comprises two structurally identical bowl-like half housing shells (3), which can be mounted in mirror inversion, each having a plane bowl bottom (4) and one curving bowl wall (5) protruding from the bowl bottom (4).

3. The device of claim 2,
characterized in
- that the plane bowl bottoms (4) form the side walls of the housing (1) and
- that the bowl bottoms (4) are pierced by circular bearing eyes (14) for the rotatable support of the coiling shaft (2).

4. The device of claim 3,
characterized in
- that the bowl rims (6) extending at approximately right angles to the bowl bottoms (4), comprise twelve plane faces (7) attached to one another,
- that in the edge regions (22) formed between the plane faces (7), centering elements (8,9) for the assembly of the housing (1) are provided, and
- that the half housing shells (3) in the finally assembled state rest on one another with the face ends of their bowl rims (6), to form a coiling chamber for the cordlike material to be coiled.

5. The device of claim 4,
characterized in that
the centering elements are formed, some by centering pins (8) and some by centering bores (9), such that in the finally assembled state, one centering pin (8) each of one half housing shell (3) is inserted into a respective centering bore (9) of the second half housing shell (3), for centering the half housing shells (3) on one another.

6. The device of one or more of the foregoing claims,
characterized by
broken-through portions of the bowl rims (6), in two regions preferably facing one another, forming an entry opening (19) and an exit opening (20) for the cordlike material, the opening cross sections of the broken-through portions being of different sizes.

7. The device of one or more of the foregoing claims,
characterized in
- that half shafts (23,24) forming the coiling shaft (2) each have one disk (17) on one of their shafts ends, in the manner of a flange, and
- that the diameter of the disks (17) is greater than the diameter of the bearing eyes (14), such that in the finally assembled state the disks (17) are operative as axial bearings of the coiling shaft (2).

8. The device of claim 7,
characterized in that
the peripheral regions (15) of the bearing eyes (14) are bent with an offset such that an open track guide for the disks (17) that corresponds to the diameter of the disks (17) is formed.

9. The device of claim 8,
characterized in
- that the disks (17) are slit at a tangent to form spring arms (41),
- that the spring arms (41) have braking jaws (42) on their fee ends, and
- that the spring arms (41) with their braking jaws (42), in the finally assembled state, rest under pressure on the peripheral regions (15) of the track guide, to make rotation of the coiling shaft (2) more difficult.

10. The device of one or more of the foregoing claims,
characterized in
- that one half shaft is a key half (23), with detent elements on the shaft end opposite the disk (17),
- that the second half shaft is a lock half (24), with receiving elements on the shaft end opposite the disk (17) which are formed complementary to the detent elements, and
- that to assemble the coiling shaft (2),
-- the detent elements are insertable into the receiving elements, and
-- in the completely inserted state of the detent elements, the lock half (24) and the key half (23) are rotatable relative to one another such that the detent elements lock into the receiving elements in the manner of a bayonet mount.

11. The device of claim 10,
characterized in
- that the detent elements substantially comprise rails (32), projecting from the disk (17) in the axial direction (13), and detent protrusions (36) fixed on the rails (32) and projecting transversely to the axial direction (13), and
- that the receiving elements comprise closed track guides (44), projecting in the axial direction (13) from the disk (17), for the rails (32) and locking hooks (47) protruding into the track guides (44) transversely to the axial direction (13).

12. The device of claim 11,
characterized in
- that the key half (23) has two substantially L-shaped rails (32) disposed in point symmetry with one another and with their insides toward one another,
-- wherein one leg of the L is a support leg (33) for the detent protrusion (36) molded onto its outside, and
-- wherein the other leg of the L is a guide leg (34) with a rounded guide face on its outside, and
- that the lock half (24) correspondingly has two track guides (44) in point symmetry with one another, of flat-oval cross section (46),
-- wherein the flat sides of their hollow cross sections (46) are oriented toward one another,
-- wherein the faces of their rounded sides together with the guide faces of the guide legs (34) are operative as sliding guides, and
-- wherein the locking hooks (47) partly close the hollow cross sections (46) on the shaft end remote from the disk (17).

13. The device of claim 12,
characterized in
- that the detent protrusions (36) are supported counter to the axial exertion of force by supports (37) disposed substantially perpendicular to and centrally on the support legs (33),
-- wherein one support (37) is triangular, such that its two legs forming a right angle rest on the detent protrusion (36) and on the support leg (33) and its hypotenuse extends opposite the angle formed by the detent protrusion (36) and the support leg (33), and
-- wherein the other support (37) is a support rib (38) extending perpendicularly from the detent protrusion (36) to the key shaft end on the support leg (33), and
- that the track guides (44) have a flat-oval outer wall cross section corresponding to their hollow cross section (46),
-- wherein the outer flat sides (28) are disposed oriented toward one another and are spaced apart to form a fixation slot (30) between them for the cordlike material, and
-- wherein a guide groove (45) is recessed in only one outer flat side (28).

14. The device of claim 13,
characterized in
- that a sword-like strip (31) projects perpendicularly from the disk (17) on the key half (23), disposed at right angles to the guide legs (34) and extending in the axial direction (13),
- that on the lock half (24), a sword-like strip (31) likewise projects perpendicularly from the disk (17), closing the fixation slot (30) between the track guides (44) peripherally on one side, and
- that the strip (31) of the key half (23) slides partway in the guide groove (45) during the insertion of the key half (23) into the lock half (24).

15. The device of one or more of the foregoing claims,
characterized in
- that flat-oval spacer elements (27), with their flat sides (28) oriented toward one another, are provided on the key half (23) in the axial direction (13) between the disk (17) and the rails (32), the spacer elements (27) forming between them a fixation slot (30) for the cordlike material, and
- that the cross section of each spacer element (27) and the outer wall cross section of each track guide (44) is identical, such that the outer rounded sides (29), remote from one another, of the spacer elements (27) and track guides (44), in the finally assembled state of the coiling shaft (2), form two half-round coiling faces, which are continuous in the axial direction (13), for the cordlike material.

16. The device of claim 15,
characterized in
- that the axial length of the strip (31) on the key half (23) corresponds to the axial length of the rails (32),
- that the axial length of the strip (31) on the lock half (24) corresponds to the axial length of the track guides (44), and
- that in the finally assembled state of the coiling shaft (2), the face ends of the spacer elements (27) and the face ends of the track guides (44) rest on one another, wherein one strip (31) each closes a respective open peripheral side of the fixation slot (30), formed between the spacer elements (27) and the track guides (44), except for a through opening corresponding to the axial length of the spacer elements (27), such that the spacer elements (27) and the track guides (44), on the one hand, and the strips (31), on the other, between them form a hollow conduit for the fixation of the cordlike material.

17. The device of claims 1-16,
characterized
- by an insertion position of the two half shafts (23,24) such that
-- the guide legs (34) rest slidingly on the guide faces,
-- that the support rib (38) rests with its narrow side, for positional securing, on the narrow side of a locking hook (47), and
-- that the strip (31) of the key half (23) slides in the guide groove (45) of the outer flat side (28) of the track guide (44),
-- wherein a length of the cordlike material rests between the track guides (44) protruding in forked fashion from the disk (17) of the lock half (24), and
- by a locking position of the half shafts (23,24) such that
-- the locking hooks (47) engage the detent protrusions (36) from behind, and
-- that the cord passes through the hollow conduit, entering the hollow conduit through the through opening on the side toward the key half and exiting from the hollow conduit through the through opening on the side toward the lock half.

18. The device of claim 17,
characterized in
- that blind bores (16) for the attachment of a handle bracket are provided on the outsides of the housing (1),
- that preferably colored markings (21) are provided in raised form, as aids in assembly, on the outsides of the housing (1), and
- that likewise preferably colored markings (21) are provided in raised form on the outsides of the disks (17) as well, such that in the insertion position the markings (21) are located on the same imaginary line.

19. The device of claim 18,
characterized
- by operation elements, preferably turning knobs (39), projecting from the outsides of the disks (17), and
- by a coin slot in the outside of one disk (17) for the insertion of a coin as an aid in assembly in rotating the half shafts (23,24) relative to one another.

## Revendications

1. Dispositif d'enroulement pour une matière en forme de fil, comportant
- un boîtier (1) pouvant être composé de deux demi-coques de boîtier (3), et
- un arbre d'enroulement (2) monté en rotation dans le boîtier et formé par deux demi-arbres (23) qui peuvent être introduits depuis deux côtés différents dans le boîtier (1) déjà assemblé,
caractérisé en ce qu'à l'état de montage final
- les deux demi-arbres (23, 24) sont mutuellement enclenchés par coopération de formes selon le principe mâle/femelle, et
- l'arbre d'enroulement (2) serre les deux demi-coques de boîtier (3) l'une contre l'autre à l'état de montage final.

2. Dispositif selon la revendication 1, caractérisé en ce que le boîtier (1) est constitué par deux demi-coques de boîtier (3) structurellement identiques, susceptibles d'être montées symétriquement l'une de l'autre et présentant la forme d'une cuvette, qui comportent chacune un fond de cuvette plan (4) et une paroi de cuvette (5) bombée dépassant du fond de cuvette (4).

3. Dispositif selon la revendication 2, caractérisé en ce que :
- les fonds de cuvette plans (4) forment les parois latérales du boîtier, et
- les fonds de cuvette (4) sont traversés par des oeillets de montage (14) circulaires pour le montage en rotation de l'arbre d'enroulement (2).

4. Dispositif selon la revendication 3, caractérisé en ce que :
- les bordures de cuvette (6) qui s'étendent approximativement perpendiculairement aux fonds de cuvette (4) sont constituées par douze surfaces planes (7) disposées les unes contre les autres,
- des éléments de centrage (8, 9) pour le montage du boîtier sont agencés dans les régions d'arête (22) formées entre les surfaces planes (7), et
- les demi-coques de boîtier (3) sont posées, à l'état de montage final, par les faces frontales de leurs bordures de cuvette (6), les unes sur les autres pour former une chambre d'enroulement pour la matière à enrouler en forme de fil.

5. Dispositif selon la revendication 4, caractérisé en ce que les éléments de centrage sont formés en partie par des tiges de centrage (8) et en partie par des perçages de centrage (9), de telle sorte qu'à l'état de montage final, respectivement une tige de centrage (8) de l'une des demi-coques de boîtier (3) est poussée dans un perçage de centrage respectif (9) de la seconde demi-coque de boîtier (3) pour le centrage des demi-coques de boîtier (3) l'une sur l'autre.

6. Dispositif selon l'une ou plusieurs des revendications précédentes, caractérisé par des évidements dans les bordures de cuvette (6) prévus dans deux régions situées de préférence l'une en vis-à-vis de l'autre en tant qu'ouverture d'entrée (19) et en tant qu'ouverture de sortie (20) pour la matière en forme de fil, les sections transversales d'ouverture des évidements présentant des tailles différentes.

7. Dispositif selon l'une ou plusieurs des revendications précédentes, caractérisé en ce que :
- les demi-arbres (23, 24) formant l'arbre d'enroulement (2) portent à la manière de bride à l'une des leurs extrémités un disque respectif (17), et
- le diamètre des disques (17) est supérieur au diamètre des oeillets de montage (14), de telle sorte qu'à l'état de montage final, les disques (17) agissent comme palier axial de l'arbre d'enroulement (2).

8. Dispositif selon la revendication 7, caractérisé en ce que les régions de bordure (15) des oeillets de montage (14) sont coudées de telle sorte qu'il se forme un guidage à piste pour les disques (17), qui est ouvert et qui correspond au diamètre des disques (17).

9. Dispositif selon la revendication 8, caractérisé en ce que :
- les disques (17) présentent une fente tangentielle pour former des bras élastiques (41),
- les bras élastiques (41) portent à leurs extrémités libres des mâchoires de freinage (42), et
- les bras élastiques (41) s'appuient sous pression par leurs mâchoires de freinage (42), à l'état de montage final, contre les régions de bordure (15) du guidage à piste pour rendre plus difficile la rotation de l'arbre d'enroulement (2).

10. Dispositif selon l'une ou plusieurs des revendications précédentes, caractérisé en ce que :
- un demi-arbre est un demi-arbre mâle (23) comportant des éléments d'enclenchement à l'extrémité d'arbre opposée au disque (17),
- le second demi-arbre est un demi-arbre femelle (24) comportant des éléments de réception réalisés de façon complémentaire aux éléments d'enclenchement à l'extrémité d'arbre opposée au disque (17), et
- en ce que pour le montage de l'arbre d'enroulement (2) :
-- les éléments d'enclenchement peuvent être poussés dans les éléments de réception, et
-- à l'état entièrement introduit des éléments d'enclenchement, le demi-arbre femelle (23) et le demi-arbre mâle (24) peuvent être tournés l'un par rapport à l'autre, de telle sorte que les éléments d'enclenchement s'enclenchent à la manière d'une fermeture à baïonnette dans les éléments de réception.

11. Dispositif selon la revendication 10, caractérisé en ce que :
- les éléments d'enclenchement sont constitués sensiblement par des rails (32) dépassant en direction axiale (13) depuis le disque (17) et par des doigts d'enclenchement (36) fixés sur les rails (32) et dépassant transversalement à la direction axiale (13), et
- en ce que les éléments de réception sont constitués par des guidages à piste fermés (44) pour les rails (32), qui dépassent en direction axiale (13) depuis le disque (17), et par des crochets de verrouillage (47) pénétrant transversalement à la direction axiale (13) dans les guidages à piste (44).

12. Dispositif selon la revendication 11, caractérisé en ce que :
- le demi-arbre mâle (23) présente deux rails (32) agencés avec symétrie ponctuelle l'un par rapport à l'autre, orientés l'un vers l'autre par leurs faces intérieures, et sensiblement en forme de L,
-- l'un des bras de L étant un bras de support (33) pour le doigt d'enclenchement (36) formé sur sa face extérieure, et
-- l'autre bras de L étant un bras de guidage comportant sur sa face extérieure une surface de guidage arrondie ; et
- le demi-arbre femelle (24) présente en correspondance deux guidages à piste (44) agencés avec symétrie ponctuelle l'un par rapport à l'autre et présentant une section transversale creuse ovale aplatie,
-- les faces plates de deux sections transversales creuses (46) étant orientées l'une vers l'autre,
-- les surfaces de leurs faces arrondies agissant conjointement avec les surfaces de guidage des bras de guidage (34) comme guidages de coulissement, et
-- les crochets de verrouillage (47) refermant partiellement les sections transversales creuses (46) à l'extrémité d'arbre détournée du disque (17).

13. Dispositif selon la revendication 12, caractérisé en ce que :
- les doigts d'enclenchement (36) sont appuyés à l'encontre de l'action de force axiale par des supports (37) agencés sensiblement verticalement et au milieu sur les bras de support (33),
-- l'un des supports (37) étant triangulaire, de telle sorte que ses deux côtés d'angle s'appuient contre le doigt d'enclenchement (36) et contre le bras de support (33), et son hypoténuse s'étendant à l'opposé de l'angle formé par le doigt d'enclenchement (36) et par le bras de support (33), et
-- l'autre support (37) étant une nervure de support (38) s'étendant verticalement depuis le doigt d'enclenchement (36) jusqu'à l'extrémité d'arbre mâle sur le bras de support (33) ; et
- les guidages à piste (44) présentent une section transversale de paroi extérieure ovale aplatie correspondant à leur section transversale creuse (46),
-- les faces plates extérieures (28) étant agencées en orientation l'une vers l'autre et étant écartées l'une de l'autre pour former une fente de fixation (30) pour la matière en forme de fil, et
-- une gorge de guidage (45) étant ménagée uniquement dans une face plate extérieure (28).

14. Dispositif selon la revendication 13, caractérisé en ce que :
- sur le demi-arbre mâle (23), une barrette en forme de couteau (31) agencée perpendiculairement aux bras de guidage (34) et s'étendant en direction axiale (13) dépasse verticalement hors du disque (17),
- sur le demi-arbre femelle (24), une barrette en forme de couteau (31) refermant sur un côté marginalement la fente de fixation (30) entre les guidages à piste (44), dépasse également verticalement hors du disque (17), et
- la barrette (31) du demi-arbre mâle (23) coulisse partiellement dans la gorge de guidage (45) pendant l'introduction du demi-arbre mâle (23) dans le demi-arbre femelle (24).

15. Dispositif selon l'une ou plusieurs des revendications précédentes, caractérisé en ce que :
- sur le demi-arbre mâle (23) sont agencés, en direction axiale (13) entre le disque (17) et les rails (32), respectivement des éléments d'écartement ovales aplatis (27) orientés les uns vers les autres par leurs faces plates (28), qui forment entre eux une fente de fixation (30) pour la matière en forme de fil, et
- la section transversale d'un élément d'écartement respectif (27) et la section transversale de paroi extérieure d'un guidage à piste respectif (44) sont égales, de telle sorte que les faces rondes extérieures (29) détournées les unes des autres des éléments d'écartement (27) et des guidages à piste (44) forment, à l'état de montage final de l'arbre d'enroulement (2), deux surfaces d'enroulement demi-circulaires continues en direction axiale (13) pour la matière en forme de fil.

16. Dispositif selon la revendication 15, caractérisé en ce que :
- la longueur axiale de la barrette (31) sur le demi-arbre mâle (23) correspond à la longueur axiale des rails (32),
- la longueur axiale de la barrette (31) sur le demi-arbre femelle (24) correspond à la longueur axiale des guidages à piste (44), et
- à l'état de montage final de l'arbre d'enroulement (2), les faces frontales des éléments d'écartement (27) et les faces frontales des guidages à piste (44) s'appuient les unes contre les autres, une barrette respective (31) refermant respectivement une face de bordure ouverte de la fente de fixation (30) formée entre les éléments d'écartement (27) et les guidages à piste (44), exception faite d'une ouverture de passage correspondante à la longueur axiale des éléments d'écartement (27), de telle sorte que d'une part, les éléments d'écartement (27) et les guidages à piste (44), et d'autre part les barrettes (31) forment entre eux un canal creux pour la fixation de la matière en forme de fil.

17. Dispositif selon l'une quelconque des revendications 1 à 16, caractérisé par :
- une position d'introduction des deux demi-arbres (23, 24), de sorte que :
-- les bras de guidage (34) s'appuient en coulissement contre les surfaces de guidage,
-- la nervure de support (38) s'appuie par son chant contre le chant d'un crochet de verrouillage (47) pour le blocage en position, et
- la barrette (31) du demi-arbre mâle (23) coulisse dans la gorge de guidage (45) de la face plate extérieure (28) du guidage à piste (44),
-- un brin de fil de la matière en forme de fil étant logé entre les guidages à piste (44) dépassant à la manière de fourchette hors du disque (17) du demi-arbre femelle (24) ; et
- caractérisé par une position de verrouillage des demi-arbres (23, 24), de telle sorte que :
-- les crochets de verrouillage (47) s'engagent par derrière les doigts d'enclenchement (36) ; et
- le brin de fil traverse le canal creux en entrant par l'ouverture de passage du côté du demi-arbre mâle dans le canal creux, et en sortant par l'ouverture de passage du côté du demi-arbre femelle hors du canal creux.

18. Dispositif selon la revendication 17, caractérisé en ce que :
- il est prévu sur les faces extérieures du boîtier (1) des trous borgnes (16) pour la fixation d'une anse de poignée,
- sur les faces extérieures du boîtier (1) sont agencés en surélévation des marquages (21) de préférence en couleur en tant qu'aides de montage, et
- sur les faces extérieures des disques (17) sont également agencés en surélévation des marquages (21) de préférence en couleur, de telle sorte que dans la position d'introduction, les marquages (21) sont situés sur une ligne commune imaginaire.

19. Dispositif selon la revendication 18, caractérisé par :
- des éléments de manipulation, de préférence des boutons tournants, dépassant hors des faces extérieures des disques (17), et
- par une fente à pièce de monnaie dans la face extérieure d'un disque (17) pour introduire une pièce de monnaie en tant qu'aide de montage lors de la rotation des demi-arbres (23, 24) l'un par rapport à l'autre.
